# EUROPEAN PATENT APPLICATION

(11) **EP 3 561 460 A1**
(43) Date of publication of application: **30.10.2019**
(21) Application number: 16840293.1
(22) Date of filing: 21.12.2016
(51) Int. Cl.: G01G 13/08

(54) **EQUIPMENT FOR WEIGHING BATCHES OF SEAFOOD PRODUCTS**

(71) Applicant: Palinox Ingenieria y Proyectos, S.L., 08205 Sabadell (Barcelona) (ES)
(72) Inventor: FERRER CANTERO, Andrés, 08224 Terrassa (Barcelona) (ES)
(74) Representative: Manresa Val, Manuel
(86) International application number: PCT/ES2016/070919
(87) International publication number: WO 2018/115537

(57) **Abstract**

It comprises: at least a first loading belt (1) for seafood products, that transports said seafood products from a established point, supply means (2) for the equipment, characterised in that it comprises: supply belts (3,4), which comprise a first supply belt (3), and a second supply belt (4),with second supply belt (4) acting independently with respect to the first (3), weighing means (5), at the end of supply belts (3,4), which define a first container (6), which weigh the product supplied by supply belts (3,4) to said first container (6), and with first discharging means (7), for discharging the inside of first container (6), and second loading means (8) that place containers (10) under first discharging means (7) and transporting said containers (10) to an unloading belt (9).

## Description

An equipment for weighing batches of seafood products of the type comprising: at least a first loading belt for seafood products which transports said seafood products from a established point, the power supply means for the equipment, characterised in that it comprises: the feed belts comprising a first feed belt, and a second feed belt, the second feed belt acting independently with respect to the first one, the weighing means at the end of the feed belts defining a first container that weigh the product supplied by the feed belts to the said first container, and with first discharging means for discharge the contents of the first container, and the second loading means that place some containers under the first discharging means and transporting said containers to an unloading belt.

### BACKGROUND TO THE INVENTION

Different procedures and machines are known in the state of the art that weigh seafood products and organise them into batches.

Thus, Spanish Patent No. 0553744 (ES8703799) "MÁQUINA ENVASADORA", (PACKAGING MACHINE) from 1986, belongs to the state of the art, in the name of Mr. José ALONSO MARRODAN, relates to a packaging machine capable of filling all kinds of packages. It comprises a conveyor belt along which the packages are moved; a conveyor belt with buckets along which the product to be packaged is dragged, whereby the dragging surface is provided with an orifice through which most of the product to be packaged falls towards the packaging, which is filled to between 70 and 80% its capacity, with the rest of the product that has not fallen from the dragging surface continuing along a new transporter, at the end of which the product is weighed in batches or in units if they are a considerable size. It is suitable for the packaging of vegetables.

Also European Patent No. 2277020 (ES2377711) "PROCEDIMIENTO Y SISTEMA PARA PROCESAR ARTÍCULOS" (PROCEDURE AND SYSTEM FOR PROCESSING ARTICLES), from the year 2009, in the name of Scanvaegt International A/S is included in the state of the art, which relates to a procedure for processing articles that are supplied to a processing apparatus, for example a robot type processing apparatus that comprises at least one robot or a processing apparatus of the separator type that comprises at least one separator, with said processing apparatus processing the articles, said processing comprising, for example, moving, classifying or grouping the articles into batches, or another article processing considering one or more predetermined criteria, said procedure comprising the supplying of said articles to said processing apparatus through a weighing apparatus and registering the positions of the articles, with the articles being supplied through a size determining apparatus, through which data are determined which refer to at least one size parameter of the article, characterised in that - for one article, for which no weighing data have been determined or for which the determined weight does not satisfy a predetermined criterion or criteria, estimated weight data are produced by the data referring to said at least one size parameter of said article, and - said weight data estimated for said article is used as input data for said processing of the articles.

European Patent No. 2268149 (ES2379705), from the year 2009, "AGRUPACION EN LOTES EN LINEA" (GROUPING BATCHES ONLINE) in the name of Marel Stork Poultry Processing B.V. is known, which refers to an equipment for processing slaughtered animal parts and making up batches containing every one or more slaughtered animal parts, equipment comprising:-a conveyor system with a single conveyor device or with a plurality of conveyor devices, wherein each conveyor device comprises:- a worm screw transport guide that follows a trajectory,- a large number of product carriers, product carriers that are coupled to the transport guide in a suspended fashion, wherein the product carriers are each set to carry one or more slaughtered animal parts, and - drive means for moving the product carriers in a transport direction along the transport guide, wherein if there is a plurality of conveyor devices, a transfer device is provided between two conveyor devices, which is set to receive one or more slaughtered animal parts from a product carrier of a conveyor device and to transfer it/them to a product carrier of the other conveyor device, at least one device for treating slaughtered animals that is placed along the trajectory of a conveyor device and is set to subject at least some of the slaughtered animal parts that move along, to a physical treatment, a first weighing device, first weighing device that is placed along the trajectory of a conveyor device and is set to determine the weight of the one or more slaughtered animal parts carried by a product carrier, an equipment control device that comprises: means for determining the position of the slaughtered animal parts in relation to the conveyor system and which know substantially continuously the position of each slaughtered animal part in the conveyor system, memory means wherein, for each slaughtered animal part in the conveyor system, at least one memory field is present for the weight, determined by the first weighing device, of the slaughtered animal part, a device for grouping in batches which is located along the trajectory of a conveyor device for making up batches with each one containing one or more slaughtered animal parts, device for grouping in batches which have a plurality of unloading positions along the trajectory of the conveyor device, wherein the device for grouping into batches is coupled to the equipment control device and it is set up to select, based on an associated batch grouping algorithm, an unloading position for the one or more slaughtered animal parts carried by a product carrier, wherein in each unloading position a collection support is present wherein unloaded slaughtered animal parts are collected until the batch is complete, wherein the batch grouping algorithm is set to assemble the batches based on one or optionally more different batch grouping parameters, wherein the weight, as stored in the memory means of the equipment control means, acts as first batch grouping parameter, wherein one part of the conveyor system that is located directly upstream from the batch grouping device forms an intermediate storage section, the beginning of which is defined by the place where, for each product carrier that passes, each batch grouping parameter of the one of more slaughtered animal parts carried by the product carrier is known in the equipment control device and it is available for the batch grouping algorithm, so that the unloading position can be selected based on the batch grouping algorithm.

The present applicant's firm has the Utility Model No. 201130181 (ES1074246), from the year 2011, relating to a machine for grouping frozen food in batches, of the type comprising a frame, a conveyor belt, drive means and distributor means characterised in that it comprises means for receiving the frozen product once classified, which comprise an elastic reception belt, where the frozen product falls and is cushioned, and a swivelling mechanism, connected to said reception belt, which causes it to swivel until the frozen product falls into storage means.

### BRIEF DESCRIPTION OF THE INVENTION

This invention falls within the sector of machines that receive the seafood product and finally package it.

The closest document is Spanish Utility Model ES 1074246. The said Model is intended to prevent the frozen products from getting damaged when they fall down on the belt. To this end, a dumping system has been provided on the actual belt for this purpose and various suppliers in the unloading ramp that discharge the frozen product inside boxes.

The closest document is a very effective solution when dealing with quantities that are not very considerable and frozen.

This invention solves the above problem allowing the weighing in batches, of large quantities that come along the weighing belts, a first and a second one, with the possibility of being able to adjust the batch due to the fact that at least one of the second belts, has a different speed to the first belt, hence by regulating the speed of the second belt more or less products could enter the weighing means, and therefore the predetermined quantity can be arranged per batch.

An object of this invention is an equipment for weighing batches of seafood products of the type comprising: at least a first loading belt for seafood products which transports said seafood products from a established point, the power supply means for the equipment, characterised in that it comprises: the feed belts comprising a first feed belt, and a second feed belt, the second feed belt acting independently with respect to the first one, the weighing means at the end of the feed belts defining a first container that weigh the product supplied by the feed belts to the said first container, and with first discharging means for discharge the contents of the first container, and the second loading means that place some containers under the first discharging means and transporting said containers to an unloading belt.

### BRIEF DESCRIPTION OF THE DRAWINGS

In order to facilitate the explanation, this specification is accompanied by four sheets of drawings representing a practical embodiment, which is provided as a non-limiting example of the scope of this invention:
- Figure 1 is a perspective view of the invention,
- Figure 2 is a partial view, without the calibrating means,
- Figure 3 is a front view of the feed belts,
- Figure 4 is a detail of the first and second section of the second belt, and
- Figure 5 is a partial view of a system with double weighing system.

### SPECIFIC EMBODIMENT OF THIS INVENTION

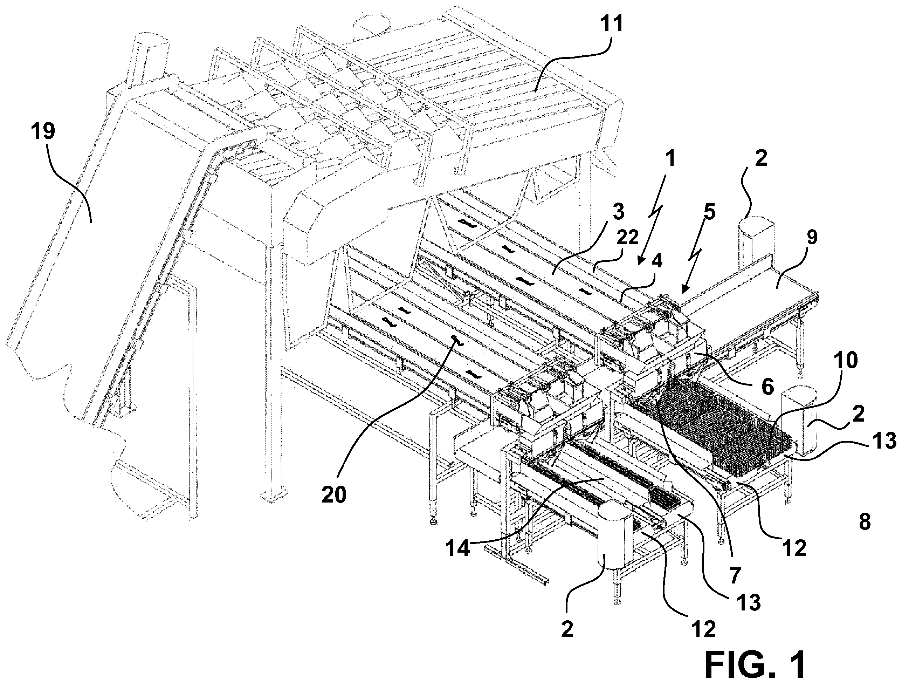

Thus, Figure 1 illustrates a first loading belt 1 with a first feed belt 3 and a second feed belt 4 delimited by side walls 22 wherein the seafood products 20 are placed, the power supply means 2, the weighing means 5 with a first container 6 and first discharging means 7, the second load means 8 with conveyor belts 12, 13, their separating means 14 and the containers 10, an unloading belt 9, and the calibrating means 11 with a feed ramp 19.

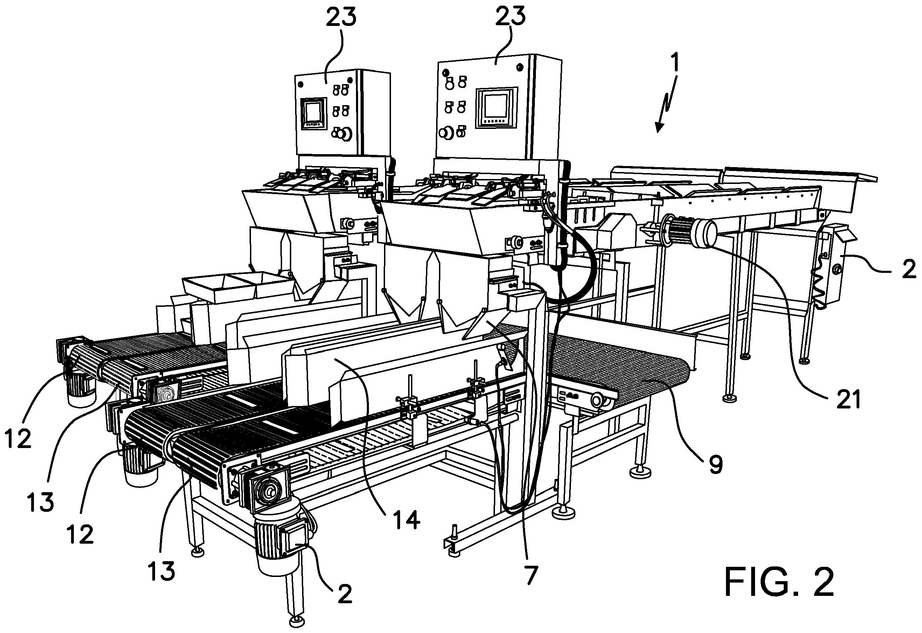

Figure 2 shows the first loading belt 1, the power supply means 2, the first containers 6, the first discharging means 7, the conveyor belts 12, 13 and their separating means 14, the unloading belt 9, the vibrator means 21 and the control means 23.

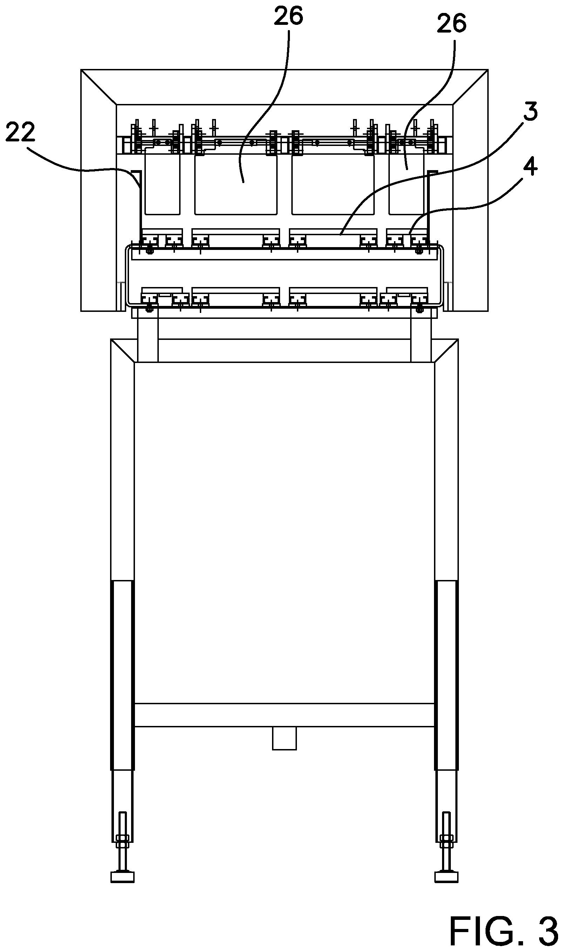

Figure 3 shows the first feed belt 3, the second feed belt 4, the blocking means 26 and side walls 22.

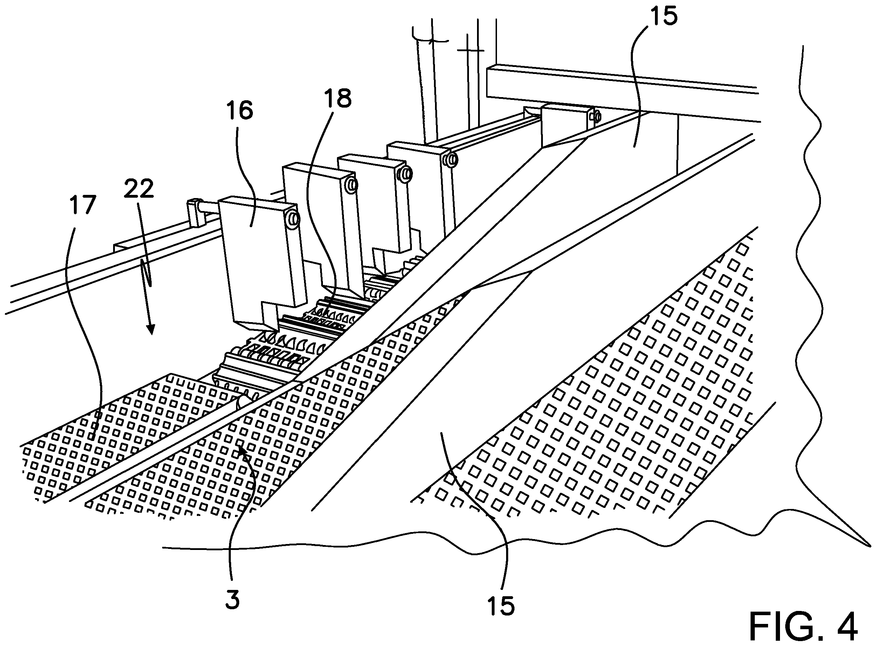

Figure 4 shows the first feed belt 3 with its first section 17 and its second section 18, deflecting blades 16, separating means 15 of the feed belts and side walls 22.

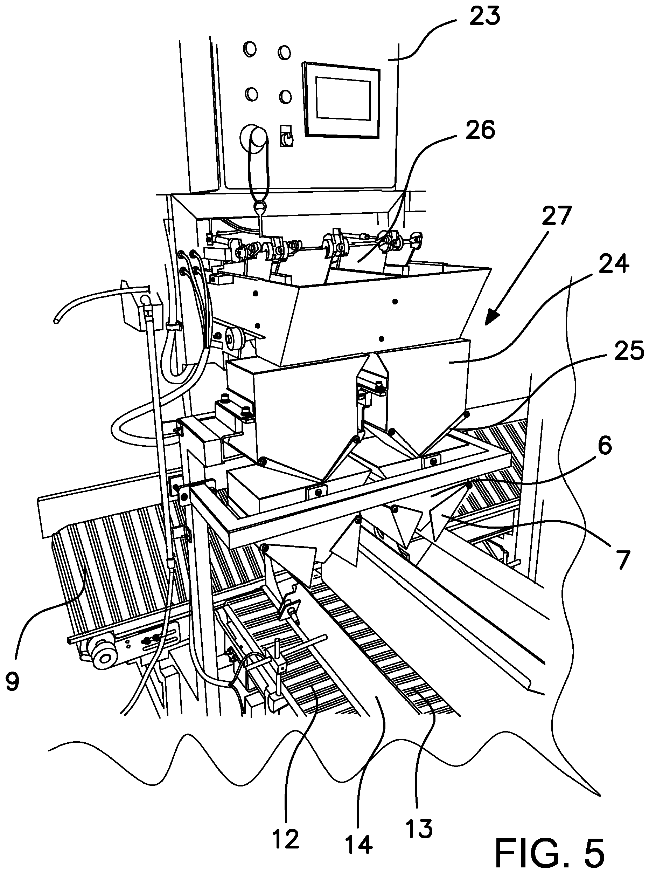

Lastly, Figure 5 shows the first containers 6, the first discharging means 7, the conveyor belts 12, 13 and their separating means 14, the unloading belt 9, the control means 23, blocking means 26, and the second weighing means 27 with second containers 24 and second discharging means 25.

Thus, in a specific embodiment, the equipment for weighing batches of seafood products includes at least a first loading belt 1 for seafood products, which transports said seafood products 20.

Now with a first loading belt 1 the equipment could work, although there would be more than one as shown in Figures 1 and 2.

The seafood product 20 is delivered from the point where said seafood product 20 is left above loading belt 1 by operator or by another machine such as, e.g. the calibrating means 11, to another point in weighing means 5.

The power supply means 2 of the equipment supply the power necessary for the different parts of the equipment to be functioned.

The equipment also comprises the feed belts 3, 4 being part of the first loading belts 1. Said feed belts 3,4 form the first feed belt 3, and a second feed belt 4, wherein peculiarly the second feed belt 4 acts independently from the first feed belt 3.

The equipment comprises the weighing means 5 at the end of the feed belts 3.4, wherein the seafood product 20 falls down.

Said weighing means 5 define a first container 6, which weigh the product supplied by feed belts 3,4 to said first container 6, for example thanks to some load cells.

At the lower part of the first container 6, some first discharging means 7 have been provided, for example some gates, for discharging the contents of first container 6 in the second load means 8.

Second loading means 8 place some containers 10 under first discharging means 7, so that when first discharging means 7 act, they will discharge the contents of first container 6 into containers 10, and from it they will be transported to unloading belt 9.

All the actions and workings of the equipment are regulated by control means 23.

Optionally, second feed belt 4 can be arranged to be narrower than the first 3, in order to transport less seafood product 20, and this way make it easier to finish adjusting the weighing in weighing means 5, by putting more or less seafood product 20 depending on the greater or lesser speed established to second feed belt 4.

The feed belts 3,4 can comprise the deflecting blades 16 on said feed belts 3,4, that deflect the seafood products, preventing, on the one hand, the seafood products 20 from piling up, and on the other hand, deflecting the seafood products 20 which due to its size should not be on said feed belt, towards another feed belt.

It could be so configured that second feed belt 4 is being part of two independent sections (Figure 4): a first section 17 and a second section 18. Said second section 18 ends in the weighing means 5, wherein seafood product 20 transports.

The speed of second section 18 is different to that of first section 17; this is done because so that the second section 18 can group or separate the seafood product 20 in said section, this way arranging by weighing means 5 the desired amount.

Optionally also, the feed belts 3, 4 comprise at least a separator means 15 of said belts. Separator means 15 can be removable.

Optionally, the equipment can be equipped with at least one vibrator 21, the function of which is to make feed belts 3, 4 vibrate. This is done for untucking the seafood product 20, i.e., to break up the piles of seafood product 20 which may have been grouped together, thus facilitating the flow of the product on feed belts 3,4.

The seafood product 20 can be placed on first loading belt 1, either by some operators, who carry out the operation manually and select the product, or by some calibrating means 11, e.g. a calibrator. This device allows the appropriate product to fall dawn on to the first loading belt 1. To load calibrator 11 a feed ramp 19 is envisaged which supplies seafood product 20 to calibrator 11.

The second loading means 8 can comprise a single conveyor belt 12, or at least two conveyor belts 12,13. This will be done depending on the size of the equipment. Also, when there is more than one conveyor belt 12,13, a separator means 14 will be placed between said belts, which can be removable or not.

The weighing means 5 can comprise at least one weighing bowl with loading cells. Further the first discharging means 7 can consist in some gates opened once the loading cells determine that the predetermined weight has been reached.

Thus, in a specific embodiment, the equipment will start to work and the power supply means 2 would run the equipment, starting it up.

The seafood product 20 would come along the feed ramp 19 and would be placed in the calibrator 11. Those seafood products 20 that reached the proposed calibre would fall in first loading belt 1.

Said loading belt 1 has two belts, a first one 3 and a second one 4. First belt 3 carries the bulk of seafood products 20 towards weighing means 5 and second belt 4 is for adjusting the weighing, i.e., when it is a question of completing a small quantity. It is second belt 4 which ends up placing the necessary quantity, with the first belt 3, for example, stopping or reducing its speed.

To prevent seafood products 20 from falling outside of loading belt 1, it is envisaged placing side walls 22 on the outer sides of loading belt 1, which coincide with second belt 4.

Also the equipment is envisaged with a vibrator means 21 to prevent the seafood product 20 from adhering to feed belts 3,4.

When the seafood product 20 reaches the first container 6, the weighing cells calculate the weight, requesting from first belt 3 and/or from second belt 4 more seafood product, via the control means 23, to complete the predetermined weight of the seafood product 20.

Once said quantity has been reached inside first container 6, the first discharging means 7 (some gates) will open and will allow the seafood products 20 fall inside a first container 6, located on second loading means 8.

Depending on the size of the equipment there may be several conveyor belts 12, 13 on the same second loading means 8 or only one.

When there are several conveyor belts 12, 13, these ones can be separated by separating means 14, that facilitate putting containers 10 in order and positioning them.

Conveyor belts 12, 13 transport containers 10 to an unloading belt 9 that transports them to their storage.

To facilitate further the accuracy of the quantity of seafood product deposited on the weighing means 5, the second feed belt 4 comprises a first section 17 where seafood product 20 is deposited from calibrator 11 and a second section 18 which is located continuing on from first section 17 and which ends on weighing means 5.

The second section 18 has a different speed to first section 17, this way, if a small quantity is needed for adjusting, the second section 18 will increase the speed with respect to first section 17, separating the seafood products 20 reached on the second section 18, making it easier for seafood product 20 to reach weighing means 5 individually and thereby adjusting the weight. Said second section 18, works like a weight adjusting compensating belt.

Between first feed belt 3 and second feed belt 4 there may also be a separating means 15, for separating the quantities that are destined to adjust the weight in weighing means 5 (the ones that go along second feed belt 4), the quantities that are destined to more abundant quantities. This separator 15 improves the product alignment, to prevent them from entering the first container 6 in pairs or in threes.

There is also the possibility of mounting some deflecting blades 16 on second feed belt 4, allowing that the product does not arrive one on the top of another, i.e., the deflecting blades only allow to pass the seafood product 20 of a certain size and everything over that is not allowed access and it is returned back to the first feed belt 3 or separated.

The control means 23 permit to program the equipment operation, determination of the weight that will be discharged over the containers 10, the calibration of the seafood product, the speed of the different feed belts 3, 4, etc. All these parameters can be different depending on the seafood product to be weighed and batched.

Optionally, there is the possibility of setting up a double weighing system (Fig. 5). This system implies setting second weighing means comprising a second container 24 above first container 6, so that in the rest position it allows the seafood product 20 pass into the first container 6, and when it is necessary, because, for example, under first container 6 there are no containers 10, said second container 24 is filled with seafood product 20, with said second container 24 closing second discharging means 25 at the lower part and preventing the exit of the seafood product 20.

Further, when the container 20 is placed under first discharging means 7, they would open allowing the seafood product fall into container 10 and second container 24 would allow the stored seafood product 20 falls into next container 10, closing the second discharging means 25 once said container 10 has been filled.

Optionally, the blocking means 26 have been arranged, e.g. the flaps, at the end of feed belts 3,4 and above the same, so that they allow said blocking means to stop the fall of seafood product 20 inside the weighing means 5. The flaps 26 allow blocking the passage of seafood product 20 and this way controlling the flow of seafood products 20, allowing the necessary amount to fall into weighing means 5.

This invention describes new equipment for weighing batches of seafood products. The examples mentioned here do not limit the invention, and therefore it can have different applications and/or adaptations, all within the scope of the following claims.

## Claims

1. An equipment for weighing batches of seafood products of the type comprising:
- at least a first loading belt (1) for seafood products, which transports said seafood products from one established point,
- power supply means (2) of the equipment,
**characterised in that** it comprises:
- feed belts (3,4), which comprise a first feed belt (3), and a second feed belt (4), with the second feed belt (4) acting independently with respect to the first (3) one,
- weighing means (5), at the end of the feed belts (3,4), that define a first container (6), that weigh the product supplied by feed belts (3,4) to said first container (6), and with first discharging means (7), for discharging the contents of first container (6),
- second loading means (8) that place containers (10) under the first discharging means (7) and transporting said containers (10) to an unloading belt (9), and
- control means (23) that regulate the operation of the equipment.

2. An equipment, according to claim 1 **characterised in that** second feed belt (4) is narrower than the first (3) one.

3. An equipment, according to claim 1, **characterised in that** it comprises at least one vibrator that makes vibrating the feed belts (3,4).

4. An equipment, according to claim 1, **characterised in that** it comprises calibrating means (11) of the product that first loading belt (1) transports before first loading belt (1).

5. An equipment, according to claim 1, **characterised in that** the second loading means (8) comprise a single conveyor belt (12)

6. An equipment, according to claim 1, **characterised in that** the second loading means (8) are at least two conveyor belts (12,13), and comprise a separating means (14) of said belts.

7. An equipment, according to claim 6, **characterised in that** the separator means (14) is removable.

8. An equipment, according to claim 1, **characterised in that** it comprises at least one second container (24) located above first container (6) and after the feed belts (3,4), that weighs the product supplied by feed belts (3,4) to said second container (24), and with second discharging means (25), for discharging the contents of the means of second container (24).

9. An equipment, according to claim 1 or 8, **characterised in that** weighing means (5) comprise at least one weighing bowl with loading cells and the first discharging means (7) comprise gates that open once the loading cells determine that the predetermined weight has been reached.

10. An equipment, according to claim 2, **characterised in that** feed belts (3,4) comprise deflecting blades (16) on said feed belts (3,4), that deflect the seafood products.

11. An equipment, according to claim 10, **characterised in that** the second feed belt (4) comprises two independent sections, a first (17) and a second (18) that ends in weighing means (5), with said second section (18) having a different speed to the first section (17).

12. An equipment, according to claim 10, **characterised in that** feed belts (3,4) comprise at least a separator means (15) of said belts.

13. An equipment, according to claim 12, **characterised in that** the separator means (15) is removable.

14. An equipment, according to claim 1, **characterised in that** it comprises blocking means (26), like flaps, at the end of supply means (3,4), and above them.
